# EUROPÄISCHE PATENTSCHRIFT

(11) **EP 0 386 439 B1**
(45) Veröffentlichungstag und Bekanntmachung des Hinweises auf die Patenterteilung: **18.11.1993**
(21) Anmeldenummer: 90101665.9
(22) Anmeldetag: 27.01.1990
(51) Int. Cl.: G01B 7/30

(54) **Winkelsensor zur Bestimmung der Drehung einer Welle**
Angle sensor for determining the rotation of a shaft
Palpeur d'angle pour déterminer la rotation d'un arbre

(30) Priorität: 08.03.1989 DE 3907442
(43) Veröffentlichungstag der Anmeldung: 12.09.1990
(73) Patentinhaber: ROBERT BOSCH GMBH, 70442 Stuttgart (DE)
(72) Erfinder: Fecht, Günther, D-7149 Freiberg (DE); Schwendemann, Bernhard, Dr. Phys., D-7060 Schorndorf (DE)

(56) Entgegenhaltungen:
- EP-A- 0 323 899
- EP-A- 0 349 968
- PATENT ABSTRACTS OF JAPAN Band 5, Nr. 32 (P-50)(704), 27. Februar 1981; & JP - A - 55156803 (NISSAN JIDOSHA K.K.) 06.12.1980
- PATENT ABSTRACTS OF JAPAN Band 10, Nr. 247 (P-490)(2303), 26. August 1986; & JP - A - 6176901 (NISSAN MOTOR CO. LTD.) 19.04.1986
- PATENT ABSTRACTS OF JAPAN Band 12, Nr. 288 (P-741)(3135), 8. August 1988; & JP - A - 6365302 (MATSUSHITA ELECTRIC IND. CO. LTD.) 23.03.1988
- PATENT ABSTRACTS OF JAPAN Band 11, Nr. 29 (P-540)(2476), 28. Januar 1987; & JP - A - 61200422 (HITACHI LTD.) 05.09.1986

## Beschreibung

Die Erfindung geht aus Von einem Winkelsensor nach der Gattung des unabhängigen Patentanspruchs. Bei derartigen bekannten Winkelsensoren ist ein Signalgeber konzentrisch um die Lenksäule angeordnet und liefert ein sich alle 360° wiederholendes Meßsignal. Da bei Lenkungen zwischen den maximalen Stellungen der Räder aber mehrere Umdrehungen der Lenksäule vorgesehen sind, ist eine genaue Zuordnung des Meßsignals zu einer bestimmten Umdrehung nur schwer möglich. Ferner ist es auch bekannt, mit Fein- und Grobsignale erzeugenden Signalgebern zu arbeiten. Die beiden Signalgeber sind dann an verschiedenen Stellen des Lenkgetriebes angeordnet, oder befinden sich neben der Lenksäule und die Drehbewegung wird mit Hilfe von Zahnriemen von der Lenksäule auf die Signalgeber übertragen. Der Winkelsensor hat aber dadurch eine aufwendigere Konstruktion. Durch die zusätzlichen Übertragungselemente bzw. den getrennten Abgriffstellen des Drehwinkels weisen die Meßsignale Meßfehler auf.

Im PATENT ABSTRACTS OF JAPAN, Band 10, Nr. 247 (P-490) 〈2303〉 vom 26.8.1986 ist ein Winkelsensor mit zwei Signalgebern beschrieben, bei dem das sich alle 360° wiederholende Feinsignal mittels Schleifringen und eines Ringpotentiometers, die auf einem konzentrisch auf einer Welle aufbringbarem Geberelement angeordnet sind, erzeugt wird. Zur Erzeugung eines Grobsignals wird ein Signalgeber in dem Gewinde einer Gewindestange geführt. Hierbei wird die Drehbewegung der Welle mit Hilfe eines am Geberelement angeordneten Übertragungsmechanismus bewegt. Dadurch ist ein zusätzlicher Platzbedarf notwendig, und die Meßsignale können verfälscht werden. Weiterhin ist aus dem PATENT ABSTRACTS OF JAPAN, Band 5, Nr. 32 (P-50) 〈704〉 vom 27.2.1981 ein Winkelsensor bekannt, bei dem das Meßelement eines Winkelsensors zur Erzeugung eines Meßsignals in einer spiralförmigen Nut geführt ist, die in einem konzentrisch auf einer Welle aufbringbarem Geberelement ausgebildet ist.

### Vorteile der Erfindung

Der erfindungsgemäße Winkelsensor mit den kennzeichnenden Merkmalen des Anspruchs 1 oder 4 hat demgegenüber den Vorteil, daß der Sensor sehr kompakt baut. Er kann in sehr einfacher Weise an der Lenksäule befestigt werden. Das Grob- und das Feinsignal werden nahezu an der gleichen Stelle ohne Zwischengestänge abgegriffen. Das die Drehbewegung an der Lenksäule mechanisch abgreifende Element betätigt sowohl den Grob- als auch den Feinsignalgeber. Über den gesamten Drehbereich der Lenksäule ist eine hohe Genauigkeit möglich. Durch die Trennung in ein Grob- und ein Feinsignal braucht das elektrische Signal nur mit mittlerer Auflösung erfaßt zu werden. Dadurch ist die Übertragung des Signals im Fahrzeug nicht besonders störempfindlich, und im Falle spannungsanaloger Signalausgabe ist der Einsatz von im Kraftfahrzeug üblichen, preisgünstigen Analog-Digital-Wandlern möglich.

Durch die in den abhängigen Ansprüchen aufgeführten Merkmale sind vorteilhafte Weiterbildungen des im Anspruch 1 angegebenen Winkelsensors möglich.

### Zeichnung

Ausführungsbeispiele der Erfindung sind in der Zeichnung dargestellt und in der nachfolgenden Beschreibung näher erläutert. Es zeigen Figur 1 einen Schnitt durch einen an einer Lenksäule angeordneten Winkelsensor, Figur 2 eine Teilansicht des Grobsignalgebers, Figur 3 einen Verlauf der Meßspannung R des Feinsignals und des Grobsignals über den gesamten Umdrehungsbereichs U, Figur 4 einen Teilschnitt durch ein zweites Ausführungsbeispiel, Figur 5 einen Schnitt in Blickrichtung V und Figur 6 einen Schnitt in Blickrichtung VI.

### Beschreibung der Ausführungsbeispiele

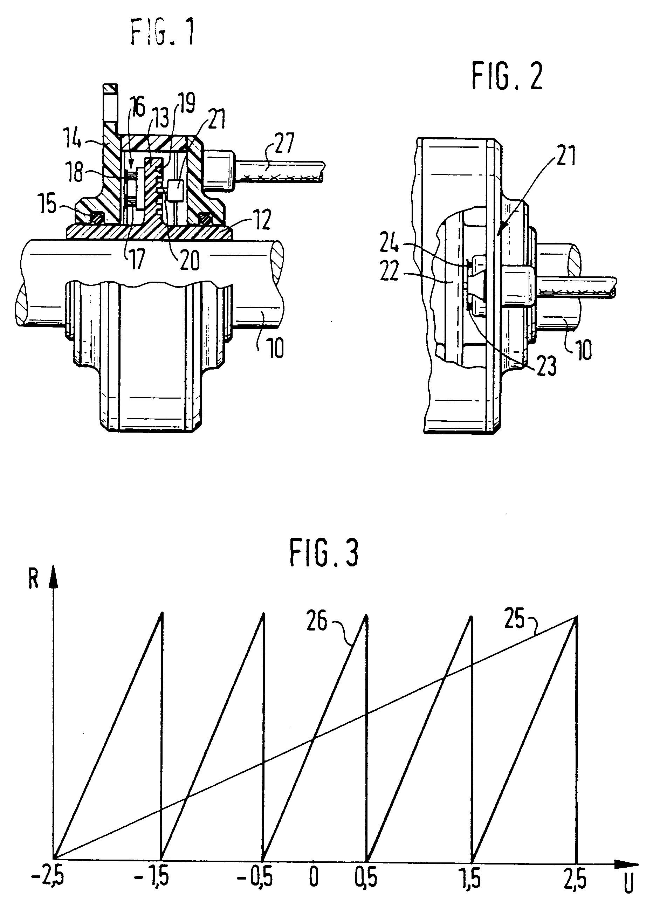

In Figur 1 ist mit 10 die Lenksäule eines nicht näher dargestellten Kraftfahrzeugs bezeichnet, auf welcher zum Abgriff eines Meßsignals ein Abgriffselement 12 befestigt ist. Das Abgriffselement 12 weist einen Flansch 13 auf, der in das Innere eines im Querschnitt U-förmig ausgebildeten und die gesamte Lenksäule 10 radial umgreifenden Gehäuses 14 ragt. Das Gehäuse 14 ist drehbar auf dem Abgriffselement 12 gelagert und sein Inneres mit Dichtringen 15 abgeschlossen, so daß kein Schmutz ins Innere des Gehäuses 14 eindringen kann. Zur Erzeugung eines Feinsignals ist auf der einen Stirnseite des Flansches 13 ein Geber 16 angeordnet. Beim Ausführungsbeispiel nach der Figur 1 ist der Geber 16 als Potentiometer ausgebildet, es können aber auch andere Signalgeber verwendet werden. Der Schleifer 17 des Potentiometers 16 ist an der Stirnseite des Flansches 13 befestigt, und die dazugehörigen Leiterbahnen 18 sind an der zugewandten Innenwand des Gehäuses 14 befestigt. Auf der anderen Stirnseite des Flansches 13 ist eine spiralförmig verlaufende Führungsnut 19 ausgebildet, in der ein Führungszapfen 20 des das Grobsignal erzeugenden Gebers 21 gleitet. Der Geber 21 ist ein in der Figur 2 näher dargestelltes Linearpotentiometer. Das Potentiometer 21 wird entlang einer radial zur Lenksäule 10 ausgerichteten Säule 22 bewegt. Hierzu wird der Schleifer 23 entlang einer an der Säule 22 angebrachten Leiterbahn 24 mit Hilfe einer schwalbenschwanzähnlichen Halterung bewegt. Zur Ableitung der Meßsignale beider Geber 16, 21 ist am Gehäuse 14 ein Kabel 27 angeordnet.

Die Lenksäule 10 und das Abgriffselement 12 führen dieselbe Drehbewegung aus. Dabei gleitet der Zapfen 20 des Signalgebers 21 in der Führungsnut 19. In der Ausgangsstellung befindet sich der Zapfen 20 in der Mitte der Länge der Führungsnut 19 und kann in beide Drehrichtungen um ±2,5 Umdrehungen der Lenksäule 10 ausgelenkt werden. Dieser Drehbereich ist der normale bei Lenkungen angestrebte Drehwinkel. Bei dem in der Figur 3 dargestellten Diagramm ist auf der X-Achse die Anzahl der Umdrehungen U der Lenksäule 10 und auf der Y-Achse die Größe des Meßsignals R aufgetragen. Die Ausgangsstellung ist auf der X-Achse mit 0 bezeichnet. Das vom Signalgeber 21 erzeugte Meßsignal 25 verläuft im optimalen Zustand von -2,5 bis +2,5 Umdrehungen kontinuierlich linear. Das vom Signalgeber 16 erzeugte Meßsignal 26 wiederholt sich nach jeder Umdrehung von 360°. Der Signalgeber 21 ist dabei so angeordnet, daß das Meßsignal bei maximalen Ausschlag der Räder, d.h. bei einer Umdrehung von -2,5 Umdrehungen beginnt. Aufgrund der Breite der Schleifer und der in den Randbereichen herrschenden physikalischen Verhältnisse erreicht die Meßkurve 26 bereits knapp vor einer vollen Umdrehung, d. h. vor dem Umdrehungswert von -1,5 Umdrehungen das Maximum und fällt steil auf das Minimum bei dem Wert von etwas mehr als - 1,5 Umdrehungen ab. Bei diesem Umdrehungswert beginnt sie dann erneut anzusteigen. Aufgrund der rechnerischen Zuordnung des sogenannten Feinsignals 26 des Signalgebers 16 und des sogenannten Grobsignals 25 des Signalgebers 21 ist eine genaue Bestimmung der Winkelstellung der Lenksäule 10 möglich.

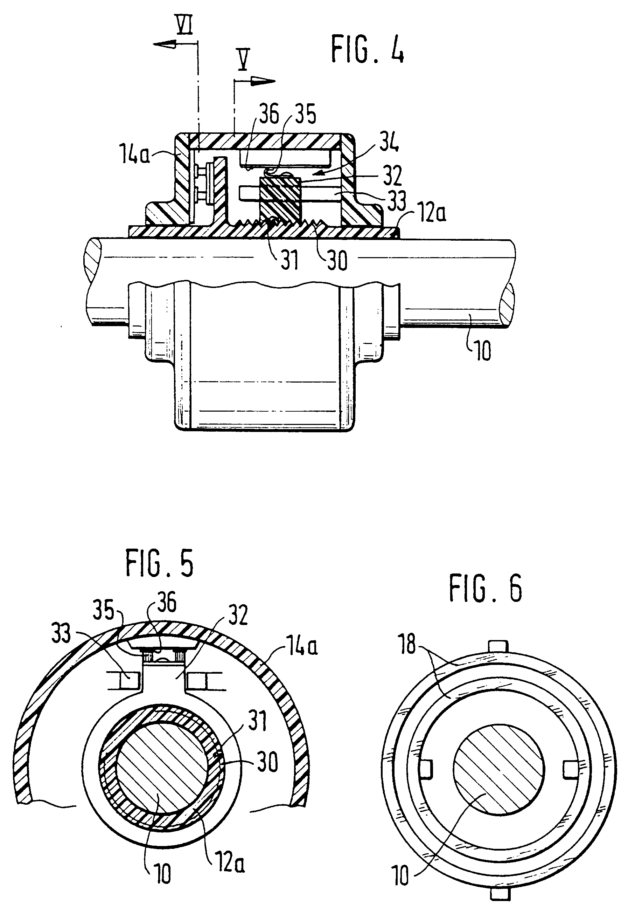

Das Ausführungsbeispiel nach Figur 4 unterscheidet sich von dem nach der Figur 1 insbesondere durch die Ausgestaltung des Signalgebers 21. Um einen kontinuierlich linearverlaufenden Kurvenverlauf für das Grobsignal 25 zu erreichen, ist statt der sehr kompakten Anordnung der spiralförmigen Führungsnut 19 auf dem Abgriffselement 12a eine parallel zur Lenksäule 10 verlaufende Wendel 30, d. h. ein Gewinde ausgebildet. Hierzu muß das Abgriffselement 12a um die Länge des Gewindes 30 gegenüber der Figur 1 verlängert werden. Wie aus der Figur 5 ersichtlich ist, greift in das Gewinde 30 ein Gegengewinde 31 ein, das ringförmig um das Abgriffselement 12a angeordnet und an dem ein Halterungsteil 32 befestigt ist. Das Halterungsteil 32 wird von zwei am Gehäuse 14a befestigten Absätzen 33 geführt. Auf dem Halterungsteil 32 ist ein Linearpotentiometer 34 angeordnet, dessen Schleifer 35 entlang der an der Gehäuseinnenwand angeordneten Leiterbahn 36 gleitet. Die Wirkungsweise und die Meßsignalgewinnung stimmen mit der des Ausführungsbeispiels nach Figur 1 überein.

## Patentansprüche

1. Winkelsensor zur Bestimmung der Drehung einer Welle (10) mit einem bestimmten Drehbereich, insbesondere der Lenksäule eines Kraftfahrzeugs, mit einem konzentrisch auf der Welle (10) aufbringbarem Geberelement (12), an dem ein erster Signalgeber (16) zur Erzeugung eines über einen Drehwinkel von ca. 360° verlaufenden und sich mit jeder Umdrehung des Geberelements (12) wiederholenden Feinsignals (26) angeordnet ist, sowie einem zweiten Signalgeber (21) zur Erzeugung eines im Verwendungsfall über den gesamten Drehbereich der Welle (10) verlaufenden Grobsignals (25), der in Wirkverbindung mit dem Geberelement (12) steht, wobei der zweite Signalgeber (21) in einer spiral- oder wendelförmigen Bahn (19, 30) geführt ist, dadurch gekennzeichnet, daß die spiraloder wendelförmige Bahn (19, 30) unmittelbar im Geberelement (12) ausgebildet ist und daß die beiden Signalgeber (16, 21) direkt mit dem Geberelement (12) gekoppelt sind.

2. Winkelsensor nach Anspruch 1,dadurch gekennzeichnet, daß an dem Geberelement (12) ein senkrecht zur Welle (10) ausgebildeter Flansch (13) ausgebildet ist, an dessen jeweiligen Stirnseiten sowohl die spiralförmige Bahn (19) als auch der erste Signalgeber (16) angeordnet ist.

3. Winkelsensor nach Anspruch 1 oder 2, dadurch gekennzeichnet, daß der zweite Signalgeber (21, 31) ein Linearpotentiometer ist.

4. Lenksäule (10) mit einem Winkelsensor nach einem der Ansprüche 1 bis 3, wobei der Winkelsensor am Eingang des Lenkgetriebes der Lenksäule (10) angeordnet ist.

## Claims

1. Angle sensor for determining the rotation of a shaft (10) having a specific rotation range, especially the steering column of a motor vehicle, having a transmitter element (12) which can be fitted concentrically on the shaft (10) and on which a first signal transmitter (16) is fitted for producing a fine signal (26) which runs over a rotation angle of approximately 360° and is repeated with each revolution of the transmitter element (12), and having a second signal transmitter (21) for producing a coarse signal (25) which in the application case runs over the entire rotation range of the shaft (10), which second signal transmitter (21) is effectively connected to the transmitter element (12), the second signal transmitter (21) being guided in a spiral or helical track (19, 30), characterised in that the spiral or helical track (19, 30) is constructed directly in the transmitter element (12), and in that the two signal transmitters (16, 21) are directly coupled to the transmitter element (12).

2. Angle sensor according to Claim 1, characterised in that a flange (13) which is constructed vertically with respect to the shaft (10) is constructed on the transmitter element (12), on the respective end sides of which flange (13) both the spiral track (19) and the first signal transmitter (16) are arranged.

3. Angle sensor according to Claim 1 or 2, characterised in that the second signal transmitter (21, 31) is a linear potentiometer.

4. Steering column (10) having an angle sensor according to one of Claims 1 to 3, the angle sensor being arranged at the input of the steering drive of the steering column (10).

## Revendications

1. Palpeur d'angle pour déterminer la rotation d'un arbre (10) avec une certaine plage de rotation, notamment pour la colonne de direction d'un véhicule automobile, comportant un élément de capteur (12) monté concentriquement à l'arbre (10), un premier générateur de signal (16) générant un signal fin s'étendant sur un angle de rotation d'environ 360° et se répétant à chaque rotation de l'élément de capteur (12), ainsi qu'un second générateur de signal (21) pour générer un signal grossier (25) s'étendant dans le cas d'application sur toute la plage de rotation de l'arbre (10), en coopérant avec l'élément de capteur (12), le second capteur de signal (21) étant guidé dans un chemin en spirale ou en hélice (19, 30), palpeur caractérisé en ce que le chemin en spirale ou le chemin hélicoïdal (19, 30) est réalisé directement dans l'élément de capteur (12) et en ce que les deux capteurs de signaux (16, 21) sont couplés directement sur l'élément de capteur (12).

2. Palpeur d'angle selon la revendication 1, caractérisé en ce qu'une bride (13) est réalisée sur l'élément de capteur (12), perpendiculairement à l'axe (10) et en ce qu' aux faces respectives sont associés à la fois le chemin en spirale (19) et le premier capteur de signal (16).

3. Palpeur d'angle selon la revendication 1 ou 2, caractérisé en ce que le second capteur de signal (21, 31) est un potentiomètre linéaire.

4. Colonne de direction (10) comportant un palpeur d'angle selon l'une des revendications 1 à 3, le palpeur d'angle étant prévu à l'entrée de la transmission de direction de la colonne de direction (10).
